# FASCICULE DE BREVET EUROPEEN

(11) **EP 2 860 743 B1**
(45) Date de publication et mention de la délivrance du brevet: **26.07.2017**
(21) Numéro de dépôt: 14187850.4
(22) Date de dépôt: 07.10.2014
(51) Int. Cl.: H01H 1/00, H01H 50/54, H01H 71/04

(54) **Dispositif de commutation et procédé de détection d'un défaut d'un tel dispositif de commutation**
Schaltvorrichtung und Verfahren zum Erkennen eines Fehlers einer solchen Schaltvorrichtung
Switching device and method for detecting a fault in such a switching device

(30) Priorité: 08.10.2013 FR 1359739
(43) Date de publication de la demande: 15.04.2015
(73) Titulaire: Schneider Electric Industries SAS, 92500 Rueil-Malmaison (FR)
(72) Inventeur: Dedina, Grégory, 38050 GRENOBLE CEDEX 09 (FR)
(74) Mandataire: Lavoix

(56) Documents cités:
- FR-A1- 2 952 222
- FR-A1- 2 981 787
- JP-A- H01 206 531
- US-A1- 2008 036 561
- US-A1- 2009 144 019
- US-B1- 6 225 807

## Description

La présente invention concerne un dispositif de commutation et un procédé de détection d'un défaut d'un tel dispositif.

Le dispositif de commutation comprend au moins une paire de contacts fixes et, pour chaque paire de contacts fixes, un contact mobile entre une position fermée et une position ouverte. Plus précisément, les contacts fixes sont reliés électriquement entre eux, lorsque le contact mobile est en position fermée, et isolés électriquement l'un de l'autre, lorsque le contact mobile est en position ouverte. Le dispositif de commutation inclut également un porte-contacts propre à maintenir le contact mobile et un actionneur propre à commander le déplacement du porte-contacts entre une première position correspondant à la position fermée du contact mobile et une deuxième position correspondant à la position ouverte du contact mobile.

De manière générale, dans le domaine des dispositifs de commutation, il est connu de détecter la soudure du ou de chaque contact mobile sur les contacts fixes correspondants. La soudure correspond à une soudure entre le ou chaque contact mobile et les contacts fixes correspondants, impropre à être cassée par la commande du déplacement du porte-contacts depuis sa première position vers sa deuxième position. Plus précisément, la soudure correspond à la présence d'une liaison entre l'un des contacts fixes et le contact mobile correspondant, ladite liaison présentant une résistance à la rupture supérieure à une force maximale exercée sur le contact mobile, lors du déplacement du porte-contacts depuis sa première position vers sa deuxième position. La force maximale étant par exemple égale à 3,1 N (Newton), de préférence à 2,9 N. Ainsi, lorsque la soudure est détectée, le dispositif de commutation n'est plus utilisable puisque le ou chaque contact mobile est immobilisé sur les contacts fixes correspondants. Cette détection est, par exemple, visible par un opérateur extérieur via des voyants mécaniques. Les dispositifs de commutation existants permettent donc, une fois que le ou chaque contact mobile est définitivement soudé sur les contacts fixes correspondants, de détecter et indiquer cette soudure à l'opérateur, mais ne permettent pas d'anticiper et de prévenir la soudure du ou de chaque contact mobile sur les contacts fixes correspondants. De tels dispositifs de commutation sont présentés dans les demandes de brevet EP-A-1 744 339 et EP-A-1 610 355.

De plus, il est connu de WO-A1-2004/057634 un dispositif de commutation dans lequel on mesure la détente d'un ressort maintenant le ou chaque contact mobile, afin de déterminer l'usure du ou de chaque contact mobile et des contacts fixes correspondants. Un tel dispositif permet de déterminer l'usure des contacts, et ainsi la durée de vie restante du dispositif. Cependant, ce dispositif ne permet pas d'anticiper la soudure du ou de chaque contact mobile sur les contacts fixes correspondants et ne permet pas de déterminer avec précision la durée de vie restante du dispositif de commutation.

Le document US 2009/144019 divulgue un dispositif de commutation selon le préambule des revendications 1 et 13.

Le but de l'invention est donc de proposer un dispositif de commutation permettant d'anticiper la soudure du ou de chaque contact mobile sur les contacts fixes correspondants et de déterminer de manière optimisée sa durée de vie restante avant soudure de ses contacts.

A cet effet, l'invention a pour objet un dispositif de commutation comprenant au moins une paire de contacts fixes et, pour la ou chaque paire de contacts fixes, un contact mobile entre une position fermée et une position ouverte, les contacts fixes étant, en position fermée du contact mobile, reliés électriquement entre eux via le contact mobile et étant isolés électriquement l'un de l'autre en position ouverte du contact mobile, un porte-contacts propre à maintenir le ou chaque contact mobile, le porte-contacts étant mobile, suivant une direction verticale, entre une première position correspondant à la position fermée du ou de chaque contact mobile et une deuxième position correspondant à la position ouverte du ou de chaque contact mobile, et un actionneur propre à commander une translation du porte-contacts entre ses première et deuxième positions.

Conformément à l'invention, ce dispositif de commutation comprend :
- une plaque propre à appliquer un effort sur le porte-contacts mobile, l'actionneur étant propre à commander la translation du porte-contacts entre ses première et deuxième positions via une commande du déplacement de la plaque, la plaque étant mobile par rapport au porte-contacts mobile,
- un capteur propre à mesurer le déplacement de la plaque mobile, suivant la direction verticale, par rapport au porte-contacts mobile, lors de la commande du déplacement de la plaque afin d'entraîner la translation du porte-contacts depuis sa première position vers sa deuxième position, et
- un organe de détection d'un défaut du dispositif de commutation en fonction d'au moins une valeur mesurée par le capteur.

Grâce à l'invention, le dispositif de commutation est propre à détecter l'apparition d'un défaut du dispositif de commutation, ce qui permet notamment de prévoir la soudure entre les contacts fixes et le ou chaque contact mobile correspondant. Il est ainsi possible de remplacer le dispositif de commutation dans une installation électrique avant qu'il ne soit plus opérationnel. En outre, suivant la fréquence de détection du défaut, il est également possible de déterminer si le dispositif de commutation est bien adapté à l'installation électrique.

Selon d'autres aspects avantageux de l'invention, le dispositif de commutation comprend en outre une ou plusieurs des caractéristiques suivantes, prises isolément ou selon toutes les combinaisons techniquement admissibles :
- le défaut détecté par l'organe de détection correspond à la présence d'au moins une microsoudure entre au moins l'un des contacts fixes et le contact mobile correspondant, la microsoudure correspondant à la présence d'une première liaison entre l'un des contacts fixes et le contact mobile correspondant, la première liaison présentant une résistance à la rupture inférieure ou égale à une force maximale exercée sur le contact mobile, lors de la commande du déplacement de la plaque pour la translation du porte-contacts depuis sa première position vers sa deuxième position ;
- le capteur est un capteur d'effort, de préférence un capteur piézoélectrique ;
- le capteur comprend une partie principale solidaire en translation, suivant l'axe vertical, du porte-contacts mobile et une sonde de mesure d'effort, mobile par rapport à la partie principale.
- la sonde de mesure d'effort est mobile en translation par rapport à la partie principale, suivant la direction verticale, sur une distance comprise entre 1 mm et 20 mm, de préférence entre 5 mm et 15 mm, alors que la plaque est propre à appliquer un effort sur la sonde de mesure d'effort de manière à déplacer le porte-contacts mobile dans sa deuxième position, lors de la commande du déplacement de la plaque pour la translation du porte-contacts depuis sa première position vers sa deuxième position ;
- suivant la direction verticale la plaque est disposée en regard de la sonde de mesure d'effort, à une distance prédéterminée de ladite sonde ;
- le porte-contacts est propre à maintenir le ou chaque contact mobile par l'intermédiaire d'un premier ressort ;
- la plaque mobile est reliée au porte-contacts par un deuxième ressort, alors que lors de la commande de la plaque mobile pour la translation du porte-contacts depuis sa première position vers sa deuxième position, la plaque mobile est propre à exercer un effort sur le deuxième ressort de manière à déplacer le porte-contacts mobile vers sa deuxième position ;
- le deuxième ressort est un ressort précontraint propre à appliquer sur la plaque mobile un effort dans une direction opposée à celle du déplacement de la plaque mobile lors de la commande de la plaque mobile pour la translation du porte-contacts depuis sa première position vers sa deuxième position ;
- l'organe de détection du défaut comprend un moyen de comparaison des valeurs mesurées avec un seuil prédéterminé, alors que l'organe de détection est propre à détecter le défaut lors de la commande de la plaque mobile afin de déplacer le porte-contacts depuis sa première position vers sa deuxième position, lorsque les valeurs mesurées par le capteur sont supérieures au seuil prédéterminé ;
- lors de la commande de la plaque mobile pour la translation du porte-contacts depuis sa première position vers sa deuxième position :
   - l'organe de détection est propre à détecter le défaut entre au moins l'un des contacts fixes et le contact mobile correspondant, lorsque les valeurs mesurées par le capteur sont supérieures au seuil prédéterminé pendant une première durée prédéterminée, comprise dans un intervalle de temps prédéterminé,
   - l'organe de détection est propre à détecter une soudure entre au moins l'un des contacts fixes et le contact mobile correspondant, lorsque les valeurs mesurées par le capteur sont supérieures au seuil prédéterminé pendant une deuxième durée prédéterminée, supérieure à la valeur maximale de l'intervalle de temps, la soudure correspondant à la présence d'une deuxième liaison entre l'un des contacts fixes et le contact mobile correspondant, la deuxième liaison présentant une résistance à la rupture supérieure à une force maximale exercée sur le contact mobile, lors de la commande du déplacement de la plaque pour la translation du porte-contacts depuis sa première position vers sa deuxième position ;
- l'organe de détection comprend un organe de calcul propre à déterminer, en fonction des valeurs mesurées, un nombre estimé de cycles d'ouverture-fermeture du contact mobile, avant soudure entre au moins l'un des contacts fixes et le contact mobile correspondant, la soudure correspondant à la présence d'une deuxième liaison entre l'un des contacts fixes et le contact mobile correspondant, ladite deuxième liaison présentant une résistance à la rupture supérieure à une force maximale exercée sur le contact mobile, lors de la commande du déplacement de la plaque pour la translation du porte-contacts depuis sa première position vers sa deuxième position.

L'invention a également pour objet un procédé de détection d'un défaut dans un dispositif de commutation comprenant au moins une paire de contacts fixes et, pour la ou chaque paire de contacts fixes, un contact mobile entre une position fermée et une position ouverte, les contacts fixes étant, en position fermée du contact mobile, reliés électriquement entre eux via le contact mobile et étant isolés électriquement l'un de l'autre en position ouverte du contact mobile, un porte-contacts propre à maintenir le ou chaque contact mobile, le porte-contacts étant mobile, suivant une direction verticale, entre une première position correspondant à la position fermée du ou de chaque contact mobile et une deuxième position correspondant à la position ouverte du ou de chaque contact mobile, et un actionneur propre à commander une translation du porte-contacts entre ses première et deuxième positions.

Conformément à l'invention, le procédé comprend en outre les étapes suivantes :
- la commande du déplacement d'une plaque par l'actionneur, le dispositif comprenant la plaque propre à appliquer un effort sur le porte-contacts mobile, la plaque entraînant la translation du porte-contacts depuis sa première position vers sa deuxième position, la plaque étant mobile par rapport au porte-contacts mobile,
- la mesure, lors de la translation du porte-contacts depuis sa première position vers sa deuxième position, du déplacement de la plaque, suivant la direction verticale, par rapport au porte-contacts mobile, et
- la détection d'un défaut du dispositif de commutation en fonction d'au moins une valeur mesurée lors de l'étape de mesure.

Selon d'autres aspects avantageux de l'invention, le dispositif de commutation comprend en outre une ou plusieurs des caractéristiques suivantes, prises isolément ou selon toutes les combinaisons techniquement admissibles :
- lors de l'étape de détection, le défaut détecté correspond à la présence d'au moins une microsoudure entre au moins l'un des contacts fixes et le contact mobile correspondant, la microsoudure correspondant à la présence d'une première liaison entre l'un des contacts fixes et le contact mobile correspondant, la première liaison présentant une résistance à la rupture inférieure ou égale à une force maximale exercée sur le contact mobile, lors de l'étape de commande ;
- suite à l'étape de mesure, le procédé comprend une étape de transmission des valeurs mesurées lors de l'étape de mesure à un organe de détection du défaut, et lors de l'étape de détection, l'organe de détection détecte le défaut si les valeurs mesurées sont supérieures à un seuil prédéterminé, alors que suite à l'étape de détection l'organe de détection réalise une étape consistant en l'émission d'un message indiquant à un opérateur si un défaut entre au moins l'un des contacts fixes et le contact mobile correspondant a été détecté.

L'invention sera mieux comprise et d'autres avantages de celle-ci apparaîtront à la lumière de la description qui va suivre, donnée uniquement à titre d'exemple non limitatif, et faite en se référant aux dessins sur lesquels :
- la figure 1 est une représentation schématique en perspective d'un contacteur selon un premier mode de réalisation de l'invention, dans lequel le contacteur est monophasé ;
- la figure 2 est une vue filaire du contacteur de la figure 1 comprenant un contact mobile en position fermée par rapport à des contacts fixes correspondants ;
- la figure 3 est une vue analogue à celle de la figure 2 dans laquelle le contact mobile est en position ouverte par rapport aux contacts fixes ;
- la figure 4 est une vue analogue à celle de la figure 3, lors de la commande de l'ouverture du contact mobile et de l'apparition d'un défaut, tel que des microsoudures, entre le contact mobile et les contacts fixes ;
- la figure 5 est un organigramme d'un procédé de détection d'un défaut, tel que des microsoudures, dans le contacteur de la figure 1 conforme à l'invention ; et
- la figure 6 est une représentation schématique en perspective d'un contacteur selon un deuxième mode de réalisation de l'invention, dans lequel le contacteur est triphasé.

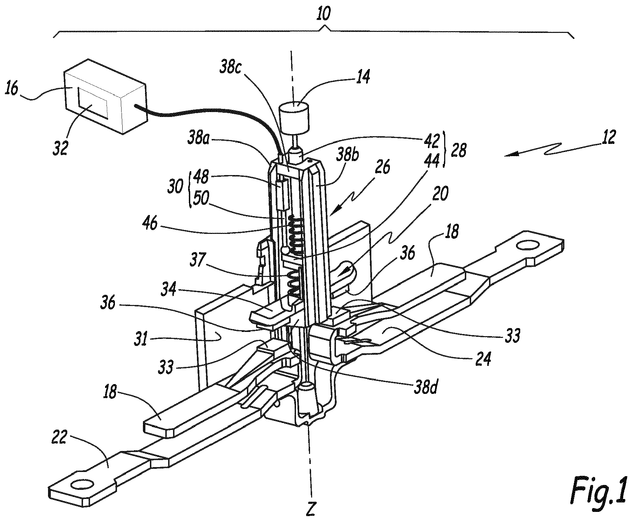

Sur la figure 1, un contacteur 10 comprend un bloc de commutation 12, un actionneur 14 et un organe 16 de détection d'un défaut.

Le bloc de commutation 12, comprend deux contacts fixes 18 et un contact 20 mobile entre une position fermée et une position ouverte. Les contacts fixes 18 sont, en position fermée du contact mobile 20, reliés électriquement entre eux via le contact mobile 20, et sont isolés électriquement l'un de l'autre en position ouverte du contact mobile 20.

On note Z une direction verticale suivant laquelle le contact mobile 20 est propre à se déplacer. La direction verticale Z forme un axe longitudinal du contacteur 10.

Le bloc de commutation 12 comprend une borne d'entrée 22 du courant dans le contacteur 10 et une borne de sortie 24 du courant du contacteur 10.

Le bloc de commutation 12 comprend un porte-contacts 26 propre à maintenir le contact mobile 20 et à l'entraîner en translation suivant la direction verticale Z. Le porte-contacts 26 est mobile entre une première position correspondant à la position fermée du contact mobile 20 et une deuxième position correspondant à la position ouverte du contact mobile 20.

Le bloc de commutation 12 comprend un organe 28, mobile suivant la direction verticale Z, relié à l'actionneur 14 et propre à être commandé par l'actionneur 14 pour commander une translation du porte-contacts 26 entre ses première et deuxième positions,, et ainsi commander le déplacement du contact mobile 20.

Le bloc de commutation 12 comprend également un capteur d'effort 30 fixé au porte-contacts 26.

Le bloc de commutation 12 comprend une chambre de coupure 31 d'un arc électrique formé entre les contacts fixes 18 et le contact mobile 20, lors de l'ouverture du contact mobile 20.

L'actionneur 14 comprend une bobine, non représentée, propre à commander le mouvement de l'organe mobile 28 entrainant la translation du porte-contacts 26 entre ses première et deuxième positions. La bobine est propre à commander le déplacement de l'organe mobile 28 et donc du porte-contacts 26 en fonction du courant la traversant.

L'organe de détection 16 est propre à détecter un défaut du contacteur 10, tel que l'apparition d'au moins une microsoudure entre le contact mobile 20 et les contacts fixes 18 en fonction de valeurs mesurées par le capteur 30. On entend par microsoudure, la présence d'une première liaison entre l'un des contacts fixes 18 et le contact mobile correspondant 16, ladite première liaison présentant une résistance à la rupture inférieure ou égale à une force maximale exercée sur le contact mobile, lors de la commande du déplacement de la l'organe mobile 28 pour une translation du porte-contacts 26 depuis sa première position vers sa deuxième position. La force maximale étant par exemple égale à 3,1 N, de préférence à 2,9 N.

L'organe de détection 16 est également propre à détecter l'apparition d'une soudure entre le contact mobile 20 et l'un des contacts fixes 18 en fonctions de valeurs mesurées par le capteur 30. La soudure correspondant à la présence d'une deuxième liaison entre l'un des contacts fixes 18 et le contact mobile 20 correspondant, ladite deuxième liaison présentant une résistance à la rupture supérieure à la force maximale exercée sur le contact mobile, lors de la commande du déplacement de la plaque 44 pour la translation du porte-contacts 26 depuis sa première position vers sa deuxième position. La résistance à la rupture de la soudure est par exemple supérieure à 3,5 N.

L'organe de détection 16 comprend un logiciel 32 de comparaison des valeurs mesurées avec un premier seuil prédéterminé S1. Le premier seuil S1 est, par exemple, compris entre 3 N et 3,1 N. L'organe de détection 16 est propre à détecter l'apparition de microsoudures entre au moins l'un des contacts fixes 18 et le contact mobile 20, lors de la commande de l'organe mobile 28 afin de déplacer le porte-contacts 26 depuis sa première position vers sa deuxième position, lorsque les valeurs mesurées par le capteur 30 sont supérieures au premier seuil prédéterminé S1 pendant une première durée T1 comprise dans un intervalle de temps I1 prédéterminé. L'intervalle de temps I1 est par exemple égal à [0,1ms ; 100ms]. L'organe de détection 16 est propre à détecter une soudure entre au moins l'un des contacts fixes 18 et le contact mobile 20, lorsque les valeurs mesurées par le capteur 30 sont supérieures au premier seuil prédéterminé S1 pendant une deuxième durée prédéterminée T2, supérieure à la valeur maximale de l'intervalle de temps I1.

Chaque contact fixe 18 comprend une pastille de contact 33. Les deux contacts fixes 18 du bloc de commutation 12 sont respectivement connectés à la borne d'entrée du courant 22 et à la borne de sortie du courant 24.

Chaque contact mobile 20 comprend une partie centrale 34 et deux pastilles de contact 36.

Le porte-contacts 26 est en forme d'un cadre, s'étendant suivant la direction verticale Z et comportant deux parois verticales 38a, 38b, sensiblement parallèles et deux parois horizontales 38c, 38d, à savoir une paroi supérieure 38c et une paroi inférieure 38d, reliant entre elles les parois verticales 38a, 38b. Le porte-contacts 26 comporte également une paroi intermédiaire 39 s'étendant perpendiculairement à la direction verticale Z. La paroi intermédiaire 39 forme une délimitation entre un premier étage 40a et un deuxième étage 40b, alignés suivant la direction verticale Z. Le premier étage 40a est plus proche des contacts fixes 18 que le deuxième étage 40b.

Le porte-contacts mobile 26 maintien le contact mobile 20 par l'intermédiaire du premier ressort 37 positionné entre le porte-contacts 26 et le contact mobile 20, suivant la direction verticale Z. Plus précisément, le premier ressort 37 est positionné entre la paroi intermédiaire 39 et la partie centrale 34.

L'organe mobile 28, est disposé entre les parois verticales 38a, 38b d'une part, et au-dessus de la paroi intermédiaire 39 d'autre part. Autrement dit, l'organe mobile 28 est positionné au niveau du deuxième étage 40b. L'organe 28 comprend une tige 42 et une plaque 44 de transmission d'effort au capteur 30. La plaque 44 est reliée au porte-contacts 26 par un deuxième ressort 46. L'organe mobile 28 est propre, via la plaque 44 et le deuxième ressort 46, à appliquer un effort sur le porte-contacts mobile 26 de manière à le déplacer depuis sa première position vers sa deuxième position.

Plus généralement, l'organe mobile 28 est propre à être commandé par l'actionneur 14 afin de déplacer le porte-contacts 26 entre ses première et deuxième positions. L'actionneur 14 est ainsi propre à déclencher le mouvement de l'organe 28 et donc du porte-contacts 26 depuis sa première position vers sa deuxième position, en interrompant le courant traversant sa bobine.

L'organe 28 et la plaque 44 sont mobiles par rapport au porte-contacts 26.

Le capteur 30 est fixé à la paroi verticale 38a et s'étend entre la paroi supérieure 38c et la paroi intermédiaire 39. Le capteur 30 est ainsi positionné à l'intérieur du deuxième étage 40b. Le capteur 30 est un capteur d'effort et de préférence un capteur piézoélectrique.

Le capteur 30 comprend une partie principale 48 solidaire en translation, suivant la direction verticale Z, du porte-contacts mobile 26 et fixée à la paroi verticale 38a, ainsi qu'une sonde 50 de mesure de l'effort. La sonde 50 est mobile par rapport à la partie principale 48. La sonde 50 est, par exemple, coulissante selon la direction verticale Z, à l'intérieur de la partie principale 48.

Le logiciel 32 de comparaison est propre à comparer les valeurs d'effort mesurées par le capteur 30 avec le premier seuil prédéterminé S1.

Le premier ressort 37 est, lorsque le contact mobile 20 est en position fermée, propre à exercer un effort de pression, suivant la direction verticale Z, afin de presser le contact mobile 20 contre les contacts fixes 18. Ainsi, dans le cas d'une usure des pastilles de contact 33, 36, le premier ressort 37 permet une meilleure fermeture du contact mobile 20.

La paroi inférieure 38d est propre à appliquer un effort sur la partie centrale 34, lors de la commande du déplacement de la plaque 44 pour la translation du porte-contacts 26 depuis sa première position vers sa deuxième position.

La paroi intermédiaire 39 est solidaire mécaniquement des parois verticales 38a, 38b et horizontales 38c, 38d, de sorte qu'un effort mécanique appliqué sur la paroi intermédiaire 39 agit plus généralement sur le porte-contacts 26.

La tige 42 est solidaire de la plaque 44 et son déplacement est commandé par l'actionneur 14.

La plaque 44 est positionnée entre la paroi intermédiaire 39 et la paroi supérieure 38c. La plaque 44 est, suivant la direction verticale Z, en contact avec la sonde 50 du capteur 30 d'une part, et en contact avec la paroi intermédiaire 39 d'autre part. La plaque 44 est propre à appliquer un effort sur le capteur 30, lors de la commande de l'organe 28 pour la translation du porte-contacts 26 depuis sa première position vers sa deuxième position. La plaque 44 est propre à appliquer un effort sur la paroi 40, lors de la commande de l'organe 28 pour la translation du porte-contacts 26 depuis sa deuxième position vers sa première position

Le deuxième ressort 46 est, par exemple, un ressort précontraint propre à appliquer sur la plaque 44 un effort dans une direction opposée à celle du déplacement de la plaque 44 lors de la commande de la translation du porte-contacts 26 depuis sa première position vers sa deuxième position. Le deuxième ressort 46 s'étend suivant la direction verticale Z entre la plaque 44 et la paroi supérieure 38c.

La sonde 50 de mesure d'effort est propre à translater par rapport à la partie principale 48, suivant la direction verticale Z, sur une distance comprise entre 1 mm et 20 mm, de préférence entre 5 mm et 15 mm.

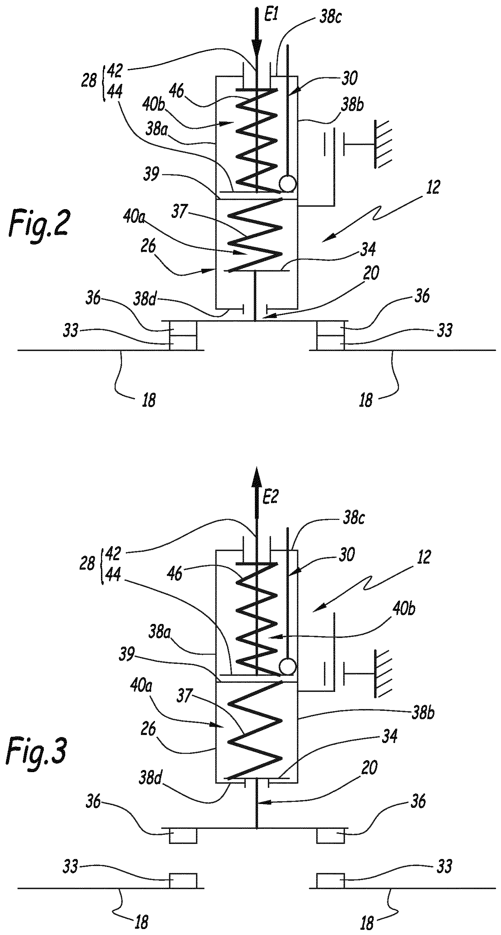

La figure 2 présente le contacteur 10 avec le contact mobile 20 en position fermée. Lors du déplacement du contact mobile 20 depuis sa position ouverte vers sa position fermée, l'organe 28 et plus précisément la plaque 44 est commandée de manière à déplacer le porte-contacts 26 depuis sa deuxième position vers sa première position. Ainsi, comme présenté à la figure 2, un effort E1 de fermeture est appliqué par l'actionneur 14 sur l'organe mobile 28, afin de déplacer l'organe mobile 28, suivant la direction verticale Z, vers les contacts fixes 18. La plaque 44 entre alors en contact avec la paroi intermédiaire 39 et entraîne par solidarité de mouvement le porte-contacts 26 depuis sa deuxième position vers sa première position. Puis, la paroi intermédiaire 39 transmet son déplacement au contact mobile 20 par l'intermédiaire du premier ressort 37. Le contact mobile 20 est alors en position fermée.

Sur la figure 3, le contact mobile 20 est en position ouverte. Lors du déplacement du contact mobile 20 depuis sa position fermée vers sa position ouverte, l'actionneur 14 applique un effort E2 d'ouverture sur l'organe mobile 28, de manière à le déplacer dans une direction opposée aux contacts fixes 18, suivant la direction verticale Z. L'organe mobile 28, et plus précisément la plaque 44, transmet cet effort d'ouverture E2 au porte-contacts 26 par l'intermédiaire du deuxième ressort 46.

Lorsque qu'aucun défaut et en particulier aucune microsoudure n'est présente entre les pastilles de contact fixe 33 et les pastilles de contact mobile 36, le capteur 30 ne mesure sensiblement aucun effort puisque le deuxième ressort 46 est précontraint. La plaque 44 applique donc un effort sur le deuxième ressort 46, qui est transmis à la paroi supérieure 38c du porte-contacts 26. Le porte-contacts 26 est alors déplacé depuis sa première position vers sa deuxième position. La paroi inférieure 38d du porte-contacts 26 est donc déplacée afin d'entrer en contact avec la partie centrale 34, et entraîne le contact mobile 20 vers sa position ouverte.

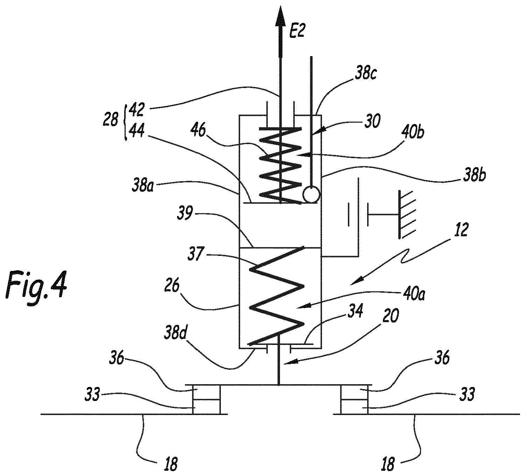

Sur la figure 4, l'actionneur 14 applique le deuxième effort E2 d'ouverture sur l'organe mobile 28 de manière à le déplacer dans une direction opposée aux contacts fixes 18, suivant la direction verticale Z. Cependant, un défaut, tel qu'une microsoudure entre le contact mobile 20 et les contacts fixes 18 apparaît. Ainsi, le contact mobile 20 est pendant un temps bref inférieur à 100 ms immobilisé contre les contacts fixes 18. Plus précisément, lorsque l'effort d'ouverture E2 est appliqué sur l'organe 28, la plaque 44 transmet cet effort au porte-contacts 26 via le deuxième ressort 46. Puis le porte-contacts 26 se déplace depuis sa première position vers sa deuxième position. Cependant, puisque le contact mobile 20 est microsoudé, lorsque l'extrémité 41 entre en contact avec la partie centrale 34, le mouvement du porte-contacts 26 est arrêté. Le porte-contacts 26 est alors immobilisé pendant un délai inférieur à 100 ms. Pendant cette immobilisation du porte-contacts 26, la plaque 44 continue son déplacement et vient appliquer un effort sur le deuxième ressort 46, cet effort étant supérieur à la précontrainte du deuxième ressort 46. La plaque 44 entre alors en contact avec la sonde 50 et la déplace. Le capteur 30 mesure alors un effort correspondant à la détection d'un défaut, tel que la présence d'une ou de microsoudures, lorsque les données mesurées sont supérieures au premier seuil S1. Le porte-contacts 26 est immobilisé jusqu'à ce que l'effort qu'il applique sur la partie centrale 34 soit suffisant pour casser la ou les microsoudures, c'est-à-dire pour séparé le contact mobile 20 des contacts fixes 18. Puis, une fois que les microsoudures sont cassées, le porte-contacts 26 poursuit son déplacement vers sa deuxième position et le bloc de commutation 12 se retrouve dans la configuration de la figure 2.Avantageusement, l'organe de détection 16 comprend un organe de calcul, non représenté, propre à déterminer, en fonction des données mesurées, un nombre estimé de cycles d'ouverture/fermeture du contact mobile 20 avant soudure entre au moins l'un des contacts fixes 18 et le contact mobile 20.

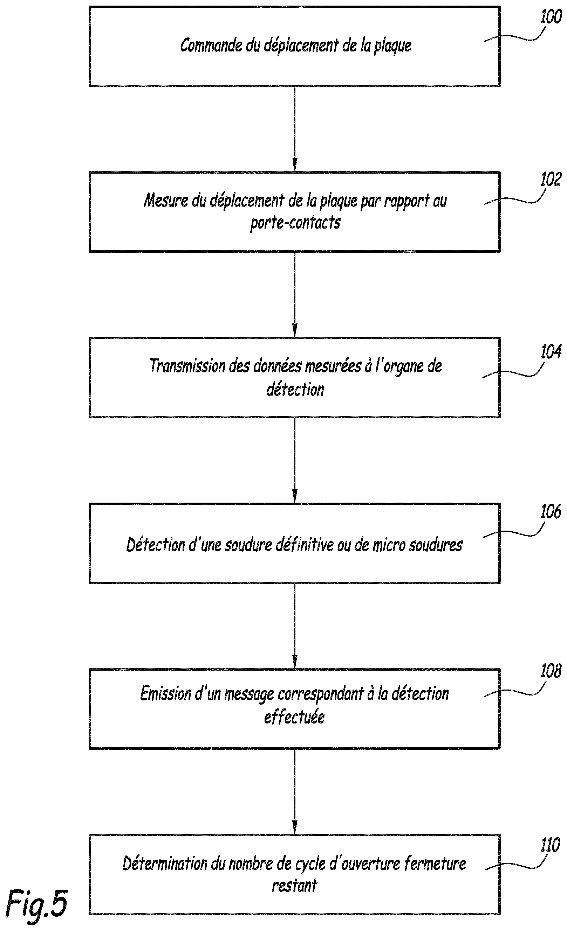

Le procédé de détection d'un défaut, tel qu'une ou des microsoudures entre le contact mobile 20 et les contacts fixes 18, dans le contacteur 10 va maintenant être présenté à l'aide de la figure 5. Au cours d'une première étape 100 l'actionneur commande l'organe 28 et plus précisément la plaque 44 afin de déplacer le porte-contacts 26 depuis sa première position vers sa deuxième position. Puis, suite à l'étape 100, lors d'une étape 102, le capteur 30 mesure le déplacement de la plaque 44 par rapport au porte-contacts 26, lors de la translation du porte-contacts 26 depuis sa première position vers sa deuxième position. Plus précisément, afin de détecter ce déplacement, le capteur 30 mesure l'effort exercé par la plaque 44 sur la sonde 50. Puis, au cours d'une étape 104, le capteur 30 transmet les données mesurées lors de l'étape 102 à l'organe de détection 16 du défaut. Ensuite, lors d'une étape 106, l'organe de détection 16 compare, via son logiciel de comparaison 32, les valeurs mesurées au premier seuil S1 prédéterminé et détermine la durée pendant laquelle les valeurs mesurées sont supérieures au seuil S1. Puis si les valeurs mesurées sont supérieures au premier seuil S1 pendant la première durée T1, l'organe de détection détecte la présence d'une ou de microsoudures. Si les valeurs mesurées sont supérieures au seuil S1 pendant la deuxième durée T2, l'organe de détection détecte la présence d'une soudure entre l'un des contacts fixes 18 et le contact mobile 20. Au cours d'une étape 108, l'organe de détection émet un message comprenant une donnée indiquant si une ou des microsoudures ou une soudure entre le contact mobile 20 et au moins l'un des contacts fixes 18 ont été détectées ou non. Ledit message correspond par exemple à un signal sonore ou à un affichage sur l'organe de détection 16.

En complément, lors d'une étape 110 l'organe de calcul détermine un nombre estimé de cycles d'ouverture/fermeture du contact mobile 20 restant, avant soudure entre au moins l'un des contacts fixes 18 et le contact mobile 20 et transmet cette information via, par exemple, un affichage sur l'organe de détection.

L'utilisation du seuil S1 et du deuxième ressort 46 précontraint permet de ne pas considérer les efforts appliqués sur le capteur 30, lors de l'ouverture du contact mobile 20, dans le cas où aucune microsoudure n'apparaît entre le contact mobile 20 et les contacts fixes 18.

Le fait d'utiliser un capteur de type piézoélectrique permet de connaître l'intensité de la microsoudure détectée, ce qui permet de déterminer avec une bonne précision le nombre estimé de cycles d'ouverture/fermeture restants.

Le fait d'identifier les microsoudures permet d'anticiper la soudure du contact mobile 20 avec les contacts fixes 18. Un opérateur de maintenance pourra donc effectuer le remplacement du contacteur 10 avant qu'il soit totalement inopérant, pour cause de soudure entre le contact mobile 20 et les contacts fixes 18.

En outre, avantageusement, l'organe de détection 16 est également apte à mesurer la fréquence d'apparition de microsoudures. Il est ainsi possible grâce à la mesure de cette fréquence d'apparition de déterminer si le contacteur est bien adapté au besoin.

Enfin, le fait que le capteur 30 soit fixé sur le porte-contacts 26 permet de détecter les microsoudures tout en limitant la prise en compte des frottements mécaniques potentiels à l'intérieur du contacteur 10.

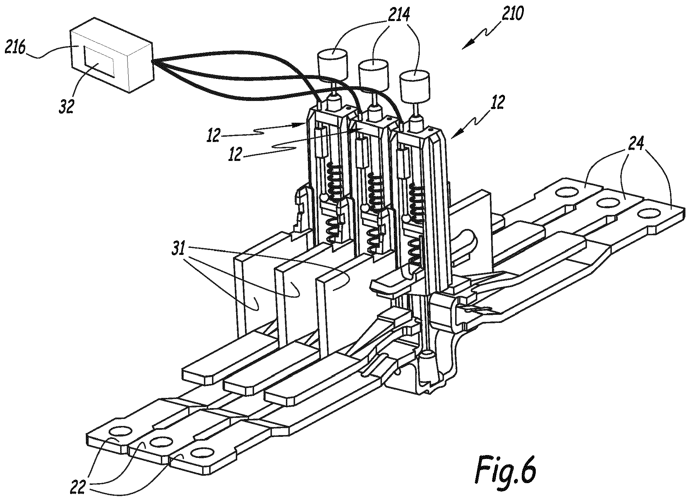

La figure 6 présente un contacteur 210 selon un deuxième mode de réalisation de l'invention. Le contacteur 210 est un contacteur triphasé qui comprend trois blocs de commutation 12, tels que ceux présentés dans le premier mode de réalisation. Le contacteur 210 comprend également trois actionneurs 214 et un organe de détection 216, respectivement similaires à l'actionneur 14 et à l'organe de détection 16.

A la figure 6, les autres éléments similaires au premier mode de réalisation portent les mêmes références et ne sont pas décrits à nouveau.

Dans cette variante, l'organe de détection 216 est propre à détecter l'apparition d'une ou de microsoudures ou d'une soudure de manière analogue à ce qui a été présenté pour le premier mode de réalisation. Avantageusement, l'organe de détection 216 est propre à identifier chaque capteur 30 et à identifier à quel bloc de commutation 12 est associé chaque capteur 30, afin de déterminer pour quel bloc de commutation 12 un défaut est éventuellement détecté.

Les avantages présentés pour le premier mode de réalisation sont applicables au deuxième mode de réalisation.

En variante, le deuxième ressort 46 n'est pas précontraint ou encore le contacteur ne comprend pas de deuxième ressort 46 et, suivant la direction verticale Z, la plaque 44 est en regard de la sonde 50 de mesure d'effort, à une distance prédéterminée de la sonde 50.

Dans le cas où le contacteur 10 ne comprend pas de deuxième ressort précontraint, lors de la commande du déplacement de la plaque 44 afin d'entrainer le porte-contacts 26 depuis sa première position vers sa deuxième position, la plaque 44 est propre à appliquer un effort sur la sonde de mesure d'effort 50 de manière à déplacer le porte-contacts mobile 26 dans sa deuxième position. La sonde 50 se déplace donc suivant la direction verticale Z, puis entraîne la partie principale 48 qui est solidaire du porte-contacts 26. Le porte-contacts 26 est donc déplacé vers sa deuxième position et est propre à déplacé le contact mobile 20 dans sa position ouverte. Dans cette variante, lorsqu'aucune microsoudure n'apparait, l'effort mesuré par le capteur 30 est de valeur faible, c'est-à-dire inférieure à un deuxième seuil prédéterminé S2, puisque le capteur 30 transmet l'effort qu'il reçoit au porte-contacts 26 qui est propre à se déplacer. Le deuxième seuil S2 est par exemple compris entre 0,2 N et 0,4 N. Le deuxième seuil S2 est supérieur au premier seuil S1. Dans le cas où le contact mobile 20 est microsoudé, l'effort mesuré par le capteur 30 est supérieur au deuxième seuil prédéterminé S2 et l'organe de détection 16 détecte le défaut, tel que la présence d'une ou de microsoudures.

Selon une autre variante, le capteur 30 est remplacé par tout type de capteur propre à mesurer le déplacement de la plaque mobile 44, suivant la direction verticale Z, par rapport au porte-contacts mobile 26, lors de la commande du déplacement de la plaque 44 afin d'entraîner le déplacement du porte-contacts 26 depuis sa première position vers sa deuxième position.

L'invention s'applique plus généralement à tout type de dispositif de commutation tel que des contacts auxiliaires, un disjonteur, et pas seulement à un contacteur.

## Revendications

1. Dispositif de commutation (10), comprenant :
- au moins une paire de contacts fixes (18) et, pour la ou chaque paire de contacts fixes (18), un contact (20) mobile entre une position fermée et une position ouverte, les contacts fixes (18) étant, en position fermée du contact mobile (20), reliés électriquement entre eux via le contact mobile (20) et étant isolés électriquement l'un de l'autre en position ouverte du contact mobile (20),
- un porte-contacts (26) propre à maintenir le ou chaque contact mobile (20), le porte-contacts (26) étant mobile, suivant une direction verticale (Z), entre une première position correspondant à la position fermée du ou de chaque contact mobile (20) et une deuxième position correspondant à la position ouverte du ou de chaque contact mobile (20), et
- un actionneur (14) propre à commander une translation du porte-contacts (26) entre ses première et deuxième positions,
- une plaque (44) propre à appliquer un effort sur le porte-contacts mobile (26), l'actionneur étant propre à commander la translation du porte-contacts (26) entre ses première et deuxième positions via une commande du déplacement de la plaque (44), la plaque (44) étant mobile par rapport au porte-contacts mobile (26),
- un capteur (30) propre à mesurer le déplacement de la plaque mobile (44), suivant la direction verticale (Z), lors de la commande du déplacement de la plaque (44) afin d'entraîner la translation du porte-contacts (26) depuis sa première position vers sa deuxième position, et
- un organe (16) de détection d'un défaut du dispositif de commutation en fonction d'au moins une valeur mesurée par le capteur (30),
**caractérisé en ce que**
le capteur (30) est propre à mesurer le déplacement de la plaque mobile (44) par rapport au porte-contacts mobile (26).

2. Dispositif selon la revendication 1, **caractérisé en ce que** l'organe de détection est propre à détecter la présence d'au moins une microsoudure entre au moins l'un des contacts fixes (18) et le contact mobile (26) correspondant, la microsoudure correspondant audit défaut du dispositif de commutation et à la présence d'une première liaison entre l'un des contacts fixes (18) et le contact mobile correspondant (16), ladite première liaison présentant une résistance à la rupture inférieure ou égale à une force maximale exercée sur le contact mobile (20), lors de la commande du déplacement de la plaque (44) pour la translation du porte-contacts (26) depuis sa première position vers sa deuxième position.

3. Dispositif selon l'une des revendications précédentes, **caractérisé en ce que** le capteur (30) est un capteur d'effort, de préférence un capteur piézoélectrique.

4. Dispositif selon la revendication 3, **caractérisé en ce que** le capteur (30) comprend une partie principale (48) solidaire en translation, suivant l'axe vertical (Z), du porte-contacts mobile (26) et une sonde (50) de mesure d'effort, mobile par rapport à la partie principale (48).

5. Dispositif selon la revendication 4, **caractérisé en ce que** la sonde de mesure d'effort (50) est mobile en translation par rapport à la partie principale (48), suivant la direction verticale (Z), sur une distance comprise entre 1 mm et 20 mm, de préférence entre 5 mm et 15 mm, et **en ce que** la plaque (44) est propre à appliquer un effort sur la sonde de mesure d'effort de manière à déplacer le porte-contacts mobile (26) dans sa deuxième position, lors de la commande du déplacement de la plaque (44) pour la translation du porte-contacts (26) depuis sa première position vers sa deuxième position.

6. Dispositif selon la revendication 5, **caractérisé en ce que** suivant la direction verticale (Z) la plaque (44) est disposée en regard de la sonde de mesure d'effort (50), à une distance prédéterminée de ladite sonde (50).

7. Dispositif selon l'une des revendications précédentes, **caractérisé en ce que** le porte-contacts (26) est propre à maintenir le ou chaque contact mobile (20) par l'intermédiaire d'un premier ressort (37).

8. Dispositif selon l'une des revendications 1 à 4, **caractérisé en ce que** la plaque mobile (44) est reliée au porte-contacts (26) par un deuxième ressort (46), et **en ce que** lors de la commande de la plaque mobile (44) pour la translation du porte-contacts (26) depuis sa première position vers sa deuxième position, la plaque mobile (44) est propre à exercer un effort (E2) sur le deuxième ressort (46) de manière à déplacer le porte-contacts mobile (26) vers sa deuxième position.

9. Dispositif selon la revendication 8, **caractérisé en ce que** le deuxième ressort (46) est un ressort précontraint propre à appliquer sur la plaque mobile (44) un effort dans une direction opposée à celle du déplacement de la plaque mobile (44) lors de la commande de la plaque mobile pour la translation du porte-contacts (26) depuis sa première position vers sa deuxième position.

10. Dispositif selon l'une des revendications précédentes, **caractérisé en ce que** l'organe de détection du défaut (16) comprend un moyen de comparaison (32) des valeurs mesurées avec un seuil prédéterminé (S1, S2), et **en ce que** l'organe de détection (16) est propre à détecter le défaut lors de la commande de la plaque mobile (44) afin de déplacer le porte-contacts (26) depuis sa première position vers sa deuxième position, lorsque les valeurs mesurées par le capteur (30) sont supérieures au seuil prédéterminé (S1).

11. Dispositif selon la revendication 10, **caractérisé en ce que** lors de la commande de la plaque mobile (44) pour la translation du porte-contacts (26) depuis sa première position vers sa deuxième position :
- l'organe de détection (16) est propre à détecter le défaut entre au moins l'un des contacts fixes (18) et le contact mobile (20) correspondant, lorsque les valeurs mesurées par le capteur (30) sont supérieures au seuil prédéterminé (S1) pendant une première durée (T1) prédéterminée, comprise dans un intervalle de temps (11) prédéterminé,
- l'organe de détection (16) est propre à détecter une soudure entre au moins l'un des contacts fixes (18) et le contact mobile (20) correspondant, lorsque les valeurs mesurées par le capteur (30) sont supérieures au seuil prédéterminé (S1) pendant une deuxième durée (T2) prédéterminée, supérieure à la valeur maximale de l'intervalle de temps (11), la soudure correspondant à la présence d'une deuxième liaison entre l'un des contacts fixes (18) et le contact mobile (20) correspondant, ladite deuxième liaison présentant une résistance à la rupture supérieure à une force maximale exercée sur le contact mobile, lors de la commande du déplacement de la plaque (44) pour la translation du porte-contacts (26) depuis sa première position vers sa deuxième position.

12. Dispositif selon l'une des revendications précédentes, **caractérisé en ce que** l'organe de détection (16) comprend un organe de calcul propre à déterminer, en fonction des valeurs mesurées, un nombre estimé de cycles d'ouverture-fermeture du contact mobile (20), avant soudure entre au moins l'un des contacts fixes (18) et le contact mobile (20) correspondant, la soudure correspondant à la présence d'une deuxième liaison entre l'un des contacts fixes (18) et le contact mobile (20) correspondant, ladite deuxième liaison présentant une résistance à la rupture supérieure à une force maximale exercée sur le contact mobile, lors de la commande du déplacement de la plaque (44) pour la translation du porte-contacts (26) depuis sa première position vers sa deuxième position.

13. Procédé de détection d'un défaut du dispositif de commutation (10), le dispositif de commutation comprenant :
- au moins une paire de contacts fixes (18) et, pour la ou chaque paire de contacts fixes (18), un contact (20) mobile entre une position fermée et une position ouverte, les contacts fixes (18) étant, en position fermée du contact mobile (20), reliés électriquement entre eux via le contact mobile (20) et étant isolés électriquement l'un de l'autre en position ouverte du contact mobile (20),
- un porte-contacts (26) propre à maintenir le ou chaque contact mobile (20), le porte-contacts (26) étant mobile, suivant une direction verticale (Z), entre une première position correspondant à la position fermée du ou de chaque contact mobile (20) et une deuxième position correspondant à la position ouverte du ou de chaque contact mobile (20), et
un actionneur (14) propre à commander une translation du porte-contacts (26) entre ses première et deuxième positions,
**caractérisé en ce que** le procédé comprend en outre les étapes suivantes :
- la commande (100) du déplacement d'une plaque (44) par l'actionneur (14), le dispositif (10) comprenant ladite plaque (44) propre à appliquer un effort sur le porte-contacts mobile (26), la plaque (44) entrainant la translation du porte-contacts (26) depuis sa première position vers sa deuxième position, la plaque (44) étant mobile par rapport au porte-contacts mobile (26),
- la mesure (102), lors de la translation du porte-contacts (26) depuis sa première position vers sa deuxième position, du déplacement de la plaque (44), suivant la direction verticale (Z), par rapport au porte-contacts mobile (26), et
- la détection (106) d'un défaut du dispositif de commutation en fonction d'au moins une valeur mesurée lors de l'étape de mesure (102).

14. Procédé selon la revendication 13, **caractérisé en ce que**, lors de l'étape de détection (106), un organe de détection (16) détecte la présence d'au moins une microsoudure entre au moins l'un des contacts fixes (18) et le contact mobile (26) correspondant, la microsoudure correspondant audit défaut du dispositif de commutation et à la présence d'une première liaison entre l'un des contacts fixes (18) et le contact mobile correspondant (16), ladite première liaison présentant une résistance à la rupture inférieure ou égale à une force maximale exercée sur le contact mobile, lors de l'étape de commande (100).

15. Procédé selon la revendication 13 ou 14, **caractérisé en ce que**, suite à l'étape de mesure (102), le procédé comprend l'étape suivante :
- la transmission (104) des valeurs mesurées lors de l'étape de mesure (102) à un organe de détection (16) du défaut, et
**en ce que** lors de l'étape de détection (106), l'organe de détection (16) détecte le défaut si les valeurs mesurées sont supérieures à un seuil prédéterminé (S1),
et **en ce que** suite à l'étape de détection (106) l'organe de détection (16) réalise l'étape suivante :
- l'émission (108) d'un message indiquant à un opérateur si un défaut entre au moins l'un des contacts fixes (18) et le contact mobile (20) correspondant a été détecté.

## Patentansprüche

1. Schaltvorrichtung (10), umfassend:
- mindestens ein Paar (18) von feststehenden Kontakten und für das oder jedes Paar (18) von feststehenden Kontakten einen zwischen einer geschlossenen und einer offenen Stellung beweglichen Kontakt (20), wobei die feststehenden Kontakte (18) in der geschlossenen Stellung des beweglichen Kontakts (20) elektrisch über den beweglichen Kontakt (20) miteinander verbunden sind und in der offenen Stellung des beweglichen Kontakts (20) elektrisch voneinander getrennt sind,
- einen Kontaktträger (26), der geeignet ist, den oder jeden beweglichen Kontakt (20) zu halten, wobei der Kontaktträger (26) gemäß einer vertikalen Richtung (Z) zwischen einer ersten Stellung, korrespondierend zu der geschlossenen Stellung des oder jedes beweglichen Kontakts (20), und einer zweiten Stellung, korrespondierend zu der offenen Stellung des oder jedes beweglichen Kontakts (20), beweglich ist, und
- ein Betätigungselement (14), das geeignet ist, eine Längsbewegung des Kontaktträgers (26) zwischen seiner ersten und zweiten Stellung zu steuern,
- eine Platte (44), die geeignet ist, eine Kraft auf den beweglichen Kontaktträger (26) aufzubringen, wobei das Betätigungselement geeignet ist, die Längsbewegung des Kontaktträgers (26) zwischen seiner ersten und seiner zweiten Stellung über eine Steuerung der Bewegung der Platte (44) zu steuern, wobei die Platte (44) in Bezug auf den beweglichen Kontaktträger (26) beweglich ist,
- einen Sensor (30), der geeignet ist, die Bewegung der beweglichen Platte (44) gemäß der Vertikalrichtung (Z) bei der Steuerung der Bewegung der Platte (44) zu messen, um die Längsbewegung des Kontaktträgers (26) von seiner ersten Stellung in seine zweite Stellung hervorzurufen, und
- ein Element (16) zum Detektieren eines Fehlers der Schaltvorrichtung abhängig von mindestens einem von dem Sensor (30) gemessenen Wert,
**dadurch gekennzeichnet, dass** der Sensor (30) geeignet ist, die Bewegung der beweglichen Platte (44) in Bezug auf den beweglichen Kontaktträger (26) zu messen.

2. Vorrichtung nach Anspruch 1, **dadurch gekennzeichnet, dass** das Detektionselement geeignet ist, das Vorhandensein mindestens einer Mikroverschweißung zwischen mindestens einem der feststehenden Kontakte (18) und dem korrespondierenden beweglichen Kontakt (26) zu detektieren, wobei die Mikroverschweißung dem Fehler der Schaltvorrichtung und dem Vorhandensein einer ersten Verbindung zwischen einem der feststehenden Kontakte (18) und dem korrespondierenden beweglichen Kontakt (16) entspricht, wobei die erste Verbindung eine Bruchfestigkeit kleiner oder gleich einer Maximalkraft aufweist, die bei der Steuerung der Bewegung der Platte (44) für die Längsbewegung des Kontaktträgers (26) von seiner ersten Stellung in seine zweite Stellung auf den beweglichen Kontakt (20) ausgeübt wird.

3. Vorrichtung nach einem der vorhergehenden Ansprüche, **dadurch gekennzeichnet, dass** der Sensor (30) ein Kraftsensor, vorzugsweise ein piezoelektrischer Sensor, ist.

4. Vorrichtung nach Anspruch 3, **dadurch gekennzeichnet, dass** der Sensor (30) ein Hauptteil (48), das gemäß der Vertikalachse (Z) translatorisch mit dem beweglichen Kontaktträger (26) verbunden ist, und eine Kraftmesssonde (50) umfasst, die in Bezug auf das Hauptteil (48) beweglich ist.

5. Vorrichtung nach Anspruch 4, **dadurch gekennzeichnet, dass** die Kraftmesssonde (50) translatorisch in Bezug auf das Hauptteil (48) gemäß der vertikalen Richtung (Z) über eine Entfernung zwischen 1 mm und 20 mm, vorzugsweise zwischen 5 mm und 15 mm, beweglich ist und dass die Platte (44) geeignet ist, eine Kraft auf die Kraftmesssonde aufzubringen, derart, dass der bewegliche Kontaktträger (26) bei der Steuerung der Bewegung der Platte (44) für die Längsbewegung des Kontaktträgers (26) von seiner ersten Stellung in seine zweite Stellung in seine zweite Stellung bewegt wird.

6. Vorrichtung nach Anspruch 5, **dadurch gekennzeichnet, dass** die Platte (44) gemäß der vertikalen Richtung (Z) gegenüberliegend zur Kraftmesssonde (50) in einer vorbestimmten Entfernung zu der Sonde (50) angeordnet ist.

7. Vorrichtung nach einem der vorhergehenden Ansprüche, **dadurch gekennzeichnet, dass** der Kontaktträger (26) geeignet ist, den oder jeden beweglichen Kontakt (20) mittels einer ersten Feder (37) zu halten.

8. Vorrichtung nach einem der Ansprüche 1 bis 4, **dadurch gekennzeichnet, dass** die bewegliche Platte (44) über eine zweite Feder (46) mit dem Kontaktträger (26) verbunden ist und dass bei der Steuerung der beweglichen Platte (44) für die Längsbewegung des Kontaktträgers (26) von seiner ersten Stellung in seine zweite Stellung die bewegliche Platte (44) geeignet ist, eine Kraft (E2) auf die zweite Feder (46) auszuüben, derart, dass der bewegliche Kontaktträger (26) in seine zweite Stellung bewegt wird.

9. Vorrichtung nach Anspruch 8, **dadurch gekennzeichnet, dass** die zweite Feder (46) eine vorgespannte Feder ist, die geeignet ist, auf die bewegliche Platte (44) eine Kraft in einer Richtung entgegengesetzt zu der Bewegung der beweglichen Platte (44) bei der Steuerung der beweglichen Platte für die Längsbewegung des Kontaktträgers (26) von seiner ersten Stellung in seine zweite Stellung aufzubringen.

10. Vorrichtung nach einem der vorhergehenden Ansprüche, **dadurch gekennzeichnet, dass** das Element (16) zur Detektion eines Fehlers ein Mittel (32) zum Vergleich der gemessenen Werte mit einer vorgegebenen Schwelle (S1, S2) umfasst und dass das Detektionselement (16) geeignet ist, den Fehler bei der Steuerung der beweglichen Platte (44) für die Verschiebung des Kontaktträgers (26) von seiner ersten Stellung in seine zweite Stellung zu detektieren, wenn die von dem Sensor (30) gemessenen Werte größer als die vorgegebene Schwelle (S1) sind.

11. Vorrichtung nach Anspruch 10, **dadurch gekennzeichnet, dass** bei der Steuerung der beweglichen Platte (44) für die Längsbewegung des Kontaktträgers (26) von seiner ersten Stellung in seine zweite Stellung:
- das Detektionselement (16) geeignet ist, den Fehler zwischen mindestens einem der feststehenden Kontakte (18) und dem korrespondierenden beweglichen Kontakt (20) zu detektieren, wenn die von dem Sensor (30) gemessenen Werte während einer ersten vorbestimmten Zeitdauer (T1), die von einem vorbestimmten Zeitintervall (I1) umfasst ist, größer sind als die vorbestimmte Schwelle (S1),
- das Detektionselement (16) geeignet ist, eine Verschweißung zwischen mindestens einem der feststehenden Kontakte (18) und dem korrespondierenden beweglichen Kontakt (20) zu detektieren, wenn die von dem Sensor (30) gemessenen Werte während einer zweiten vorbestimmten Zeitdauer (T2), die größer ist als der maximale Wert des Zeitintervalls (I1), größer sind als die vorgegebene Schwelle (S1), wobei die Verschweißung dem Vorhandensein einer zweiten Verbindung zwischen einem der feststehenden Kontakte (18) und dem korrespondierenden beweglichen Kontakt (20) entspricht, wobei die zweite Verbindung eine Bruchfestigkeit größer als eine Maximalkraft aufweist, die auf den beweglichen Kontakt bei der Steuerung der Bewegung der Platte (44) für die Längsbewegung des Kontaktträgers (26) von seiner ersten Stellung in seine zweite Stellung ausgeübt wird.

12. Vorrichtung nach einem der vorhergehenden Ansprüche, **dadurch gekennzeichnet, dass** das Detektionselement (16) ein Berechnungselement umfasst, das geeignet ist, abhängig von den gemessenen Werten eine geschätzte Anzahl von Öffnungs-Schließ-Zyklen des beweglichen Kontakts (20) vor dem Verschweißen zwischen mindestens einem der feststehenden Kontakte (18) und dem korrespondierenden beweglichen Kontakt (20) zu bestimmen, wobei das Verschweißen dem Vorhandensein einer zweiten Verbindung zwischen einem der feststehenden Kontakte (18) und dem korrespondierenden Kontakt (20) entspricht, wobei die zweite Verbindung eine Bruchfestigkeit größer als eine Maximalkraft aufweist, die bei der Steuerung der Bewegung der Platte (44) für die Längsbewegung des Kontaktträgers (26) von seiner ersten Stellung in seine zweite Stellung auf den beweglichen Kontakt ausgeübt wird.

13. Verfahren zum Detektieren eines Fehlers der Schaltvorrichtung (10), wobei die Schaltvorrichtung umfasst:
- mindestens ein Paar (18) von feststehenden Kontakten und für das oder jedes Paar (18) von feststehenden Kontakten einen zwischen einer geschlossenen und einer offenen Stellung beweglichen Kontakt (20), wobei die feststehenden Kontakte (18) in der geschlossenen Stellung des beweglichen Kontakts (20) elektrisch über den beweglichen Kontakt (20) miteinander verbunden sind und in der offenen Stellung des beweglichen Kontakts (20) elektrisch voneinander getrennt sind,
- einen Kontaktträger (26), der geeignet ist, den oder jeden beweglichen Kontakt (20) zu halten, wobei der Kontaktträger (26) gemäß einer vertikalen Richtung (Z) zwischen einer ersten Stellung, korrespondierend zu der geschlossenen Stellung des oder jedes beweglichen Kontakts (20), und einer zweiten Stellung, korrespondierend zu der offenen Stellung des oder jedes beweglichen Kontakts (20), beweglich ist, und
- ein Betätigungselement (14), das geeignet ist, eine Längsbewegung des Kontaktträgers (26) zwischen seiner ersten und zweiten Stellung zu steuern,
**dadurch gekennzeichnet, dass** das Verfahren außerdem die folgenden Schritte umfasst:
- Steuern (100) der Bewegung einer Platte (44) durch das Betätigungselement (14), wobei die Vorrichtung (10) die Platte (44) umfasst, die geeignet ist, eine Kraft auf den beweglichen Kontaktträger (26) aufzubringen, wobei die Platte (44) die Längsbewegung des Kontaktträgers (26) von seiner ersten Stellung in seine zweite Stellung hervorruft, wobei die Platte (44) in Bezug auf den beweglichen Kontaktträger (26) beweglich ist,
- Messen (102) der Bewegung der Platte (44) gemäß der vertikalen Richtung (Z) in Bezug auf den beweglichen Kontaktträger (26) bei der Längsbewegung des Kontaktträgers (26) von seiner ersten Stellung in seine zweite Stellung und
- Detektieren (106) eines Fehlers der Schaltvorrichtung abhängig von mindestens einem während des Messschritts (102) gemessenen Wert.

14. Verfahren nach Anspruch 13, **dadurch gekennzeichnet, dass** bei dem Schritt (106) des Detektierens ein Detektionselement (16) das Vorhandensein mindestens einer Mikroverschweißung zwischen mindestens einem der feststehenden Kontakte (18) und dem korrespondierenden beweglichen Kontakt (20) misst, wobei die Mikroverschweißung dem Fehler der Schaltvorrichtung und dem Vorhandensein einer ersten Verbindung zwischen einem der feststehenden Kontakte (18) und dem korrespondierenden beweglichen Kontakt (16) entspricht, wobei die erste Verbindung eine Bruchfestigkeit kleiner oder gleich einer Maximalkraft aufweist, die bei dem Schritt (100) des Steuerns auf den beweglichen Kontakt ausgeübt wird.

15. Verfahren nach Anspruch 13 oder 14, **dadurch gekennzeichnet, dass** auf den Schritt (102) des Messens folgend das Verfahren den folgenden Schritt umfasst:
- Übertragen (104) der bei dem Messschritt (102) gemessenen Werte an ein Element (16) zur Detektion des Fehlers, und
dass bei dem Detektionsschritt (106) das Detektionselement (16) den Fehler detektiert, wenn die gemessenen Werte größer als eine vorgegebene Schwelle (S1) sind,
und dass auf den Detektionsschritt (106) folgend das Detektionselement (16) den folgenden Schritt realisiert:
- Absenden (108) einer Nachricht, die einer Bedienperson anzeigt, ob ein Fehler zwischen mindestens einem der feststehenden Kontakte und dem korrespondierenden beweglichen Kontakt (20) detektiert wurde.

## Claims

1. A switching device (10), comprising:
- at least one pair of fixed contacts (18) and, for the or each pair of fixed contacts (18), a movable contact (20) that is movable between a closed position and an open position, the fixed contacts (18) being, in the closed position of the movable contact (20), electrically connected to one another via the movable contact (20) and being electrically isolated from one another in the open position of the movable contact (20),
- a contact holder (26) capable of holding the or each movable contact (20), the contact holder (26) being movable, along a vertical direction (Z), between a first position corresponding to the closed position of the or each movable contact (20) and a second position corresponding to the open position of the or each movable contact (20), and
- an actuator (14) capable of actuating a translational movement of the contact holder (26) between its first and second positions,
- a plate (44) capable of applying a force on the movable contact holder (26), the actuator being capable of actuating the translational movement of the contact holder (26) between its first and second positions via an actuation of the movement of the plate (44), the plate (44) being movable relative to the movable contact holder (26),
- a sensor (30) capable of measuring the movement of the movable plate (44) along the vertical direction (Z), during the actuation of the movement of the plate (44) in order to drive the translational movement of the contact holder (26) from its first position to its second position, and
- a detection member (16) for detecting a fault in the switching device based on at least one value measured by the sensor (30),
**characterised in that** the sensor is capable of measuring the movement of the movable plate (44) relative to the movable contact holder (26).

2. A device according to claim 1, **characterised in that** the detection member is capable of detecting the presence of at least one micro-weld between at least one of the fixed contacts (18) and the corresponding movable contact (26), the micro-weld corresponding to the said fault in the switching device and to the presence of a first link between one of the fixed contacts (18) and the corresponding movable contact (16), the said first link having a breaking strength that is less than or equal to a maximum force exerted on the movable contact (20), during the actuation of the movement of the plate (44) in order to cause the translational movement of the contact holder (26) from its first position to its second position.

3. A device according to one of the preceding claims, **characterised in that** the sensor (30) is a force sensor, preferably a piezoelectric sensor.

4. A device according to claim 3, **characterised in that** the sensor (30) comprises a main part (48) translationally secured to the movable contact holder (26), along the vertical axis (Z) and a force measuring sensor probe (50), which is movable relative to the main part (48).

5. A device according to claim 4, **characterised in that** the force measuring sensor probe (50) is movable in translational motion relative to the main part (48) along the vertical direction (Z), over a distance comprised between 1 mm and 20 mm, preferably between 5 mm and 15 mm, and **in that** the plate (44) is capable of applying a force on the force measuring sensor probe so as to move the movable contact holder (26) into its second position, during the actuation of the movement of the plate (44) in order to cause the translational movement of the contact holder (26) from its first position to its second position.

6. A device according to claim 5, **characterised in that** along the vertical direction (Z) the plate (44) is arranged to be facing the force measuring sensor probe (50), at a predetermined distance from the said sensor probe (50).

7. A device according to any one of the preceding claims, **characterised in that** the contact holder (26) is capable of holding the or each movable contact (20) by means of a first spring (37).

8. A device according to any one of claims 1 to 4, **characterised in that** the movable plate (44) is connected to the contact holder (26) by means of a second spring (46), and **in that** during the actuation of the movable plate (44) in order to cause the translational movement of the contact holder (26) from its first to its second position, the movable plate (44) is capable of exerting a force (E2) on the second spring (46) so as to move the movable contact holder (26) to its second position.

9. A device according to claim 8, **characterised in that** the second spring (46) is a prestressed spring capable of applying on the movable plate (44) a force in a direction opposite to that of the movement of the movable plate (44) during the actuation of the movable plate in order to drive the translational movement of the contact holder (26) from its first position to its second position.

10. A device according to any one of the preceding claims, **characterised in that** the fault detection member (16) comprises a comparison means (32) for comparing the measured values with a predetermined threshold value (S1, S2), and **in that** the detection member (16) is capable of detecting the fault during the actuation of the movable plate (44) in order to move the contact holder (26) from its first position to its second position, when the values measured by the sensor (30) are greater than the predetermined threshold value (S1).

11. A device according to claim 10, **characterised in that** during the actuation of the movable plate (44) in order to drive the translational movement of the contact holder (26) from its first position to its second position :
- the detection member (16) is capable of detecting the fault between at least one of the fixed contacts (18) and the corresponding movable contact (20), when the values measured by the sensor (30) are greater than the predetermined threshold value (S1) for a first predetermined time period (T1), comprised within a predetermined time interval (I1),
- the detection member (16) is capable of detecting a weld between at least one of the fixed contacts (18) and the corresponding movable contact (20), when the values measured by the sensor (30) are greater than the predetermined threshold value (S1) for a second predetermined time period (T2), that is greater than the maximum value of the time interval (11), the weld corresponding to the presence of a second link between one of the fixed contacts (18) and the corresponding movable contact (20), the said second link having a breaking strength that is higher than a maximum force exerted on the movable contact, during the actuation of the movement of the plate (44) in order to drive the translational movement of the contact holder (26) from its first position to its second position.

12. A device according to any one of the preceding claims, **characterised in that** the detection member (16) comprises a computing element capable of determining, based on the measured values, an estimated number of opening-closing cycles of the movable contact (20) prior to the welding between at least one of the fixed contacts (18) and the corresponding movable contact (20), the weld corresponding to the presence of a second link between one of the fixed contacts (18) and the corresponding movable contact (20), the said second link having a breaking strength that is higher than a maximum force exerted on the movable contact, during the actuation of the movement of the plate (44) in order to drive the translational movement of the contact holder (26) from its first position to its second position.

13. A detection method for detecting a fault in a switching device (10), the switching device including:
- at least one pair of fixed contacts (18) and, for the or each pair of fixed contacts (18), a movable contact (20) that is movable between a closed position and an open position, the fixed contacts (18) being, in the closed position of the movable contact (20), electrically connected to one another via the movable contact (20) and being electrically isolated from one another in the open position of the movable contact (20),
- a contact holder (26) capable of holding the or each movable contact (20), the contact holder (26) being movable, along a vertical direction (Z), between a first position corresponding to the closed position of the or each movable contact (20) and a second position corresponding to the open position of the or each movable contact (20), and
- an actuator (14) capable of actuating the translational movement of the contact holder (26) between its first and second positions,
**characterised in that** the method further includes the steps of:
- the actuation (100) of the movement of a plate (44) by the actuator (14), the device (10) including the said plate (44) capable of applying a force on the movable contact holder (26), the plate (44) driving the translational movement of the contact holder (26) from its first position to its second position, the plate (44) being movable relative to the movable contact holder (26),
- the measurement (102), during the translational movement of the contact holder (26) from its first position to its second position, of the movement of the plate (44), along the vertical direction (Z) relative to the movable contact holder (26), and
- the detection (106) of a fault in the switching device based on at least one value measured during the step of measuring (102).

14. A method according to claim 13, **characterised in that**, during the detection step (106), a detection member (16) detects the presence of at least one micro-weld between at least one of the fixed contacts (18) and the corresponding movable contact (26), the micro-weld corresponding to the said fault in the switching device and to the presence of a first link between one of the fixed contacts (18) and the corresponding movable contact (16), the said first link having a breaking strength that is less than or equal to a maximum force exerted on the movable contact, during the actuation step (100).

15. A method according to claim 13 or 14, **characterised in that**, following the measurement step (102), the method includes a step of:
- transmitting (104) of the values measured during the measurement step (102) to a detection member for detecting (16) the fault, and
**in that** during the detection step (106), the detection member (16) detects a fault if the measured values are greater than a predetermined threshold value (S1),
and **in that** following the detection step (106) the detection member (16) performs the following step of:
- sending (108) of a message indicating to an operator whether a fault between at least one of the fixed contacts (18) and the corresponding movable contact (20) has been detected.
